# FASCICULE DE BREVET EUROPEEN

(11) **EP 0 586 297 B1**
(45) Date de publication et mention de la délivrance du brevet: **04.02.1998**
(21) Numéro de dépôt: 93402127.0
(22) Date de dépôt: 31.08.1993
(51) Int. Cl.: F16L 1/10, B23K 37/053

(54) **Dispositif de positionnement bout à bout et en alignement axial de deux pièces allongées**
Vorrichtung zum axialen Ausrichten und zur Stosspositionierung von zwei länglichen Körpern
Device for axial alignment and butt-positioning of two elongated members

(30) Priorité: 04.09.1992 FR 9210610
(43) Date de publication de la demande: 09.03.1994
(73) Titulaire: SOCIETE JOSEPH SAURON MATERIEL INDUSTRIEL, F-91200 Athis Mons (FR); GAZ DE FRANCE, 75017 Paris (FR)
(72) Inventeur: Sauron, Jean, F-91210 Draveil (FR); Dala, Camille, F-91390 Morsang sur Orge (FR)
(74) Mandataire: Durand, Yves Armand Louis

(56) Documents cités:
- EP-A- 0 456 123
- WO-A-87/01426
- FR-A- 2 587 272
- US-A- 2 692 159
- US-A- 2 730 796
- US-A- 3 831 256

## Description

La présente invention a essentiellement pour objet un dispositif de positionnement bout à bout et en alignement axial de deux pièces allongées, telles que par exemple des tronçons de tube, en vue de leur assemblage.

On a déjà proposé divers systèmes pour raccorder, par soudage par exemple, des tubes ou canalisations enfouies dans le sol et devant assurer le transport de gaz par exemple.

Mais ces systèmes constituaient généralement des ensembles lourds, difficiles à manoeuvrer et non utilisables dans toutes les fouilles pratiquées dans le sol pour recevoir les canalisations.

En outre, de tels systèmes, comme on le comprend, rendaient difficiles l'opération nécessaire et délicate de positionnement bout à bout et précis, c'est-à-dire en coïncidence parfaite, des deux extrémités de tube ou de canalisation à raccorder.

Par ailleurs, on connaît d'après le document US-A-3 831 256 un dispositif correspondant au préambule de la revendication 1.

La présente invention a pour but de proposer un dispositif permettant un alignement axial précis et parfait des tubes à assembler, et cela tout en les maintenant parfaitement immobiles pendant la durée du raccordement qui peut être effectué par soudage, à l'aide par exemple d'un manchon électrosoudable.

A cet effet, l'invention a pour objet un dispositif de positionnement bout à bout et en alignement axial de deux pièces allongées, telles que par exemple des tronçons de tube, en vue de leur assemblage et du type comprenant deux supports mobiles relativement constitués chacun par un berceau apte à supporter un tronçon de tube, caractérisé en ce que les deux berceaux sont chacun montés en porte-à-faux sur un bâti monté coulissant sur une poutre, en ce que les deux berceaux sont montés articulés en opposition sur le bâti de part et d'autre de la poutre pour que la rotation autour de l'articulation de l'un des berceaux dans un sens et la rotation de l'autre berceau dans le sens inverse réalise l'alignement axial des tronçons de tube portés par les berceaux en un point correspondant à l'intersection des courses de rotation inverses des deux berceaux, et en ce qu'un élément de réglage de la course de rotation des berceaux est monté entre le berceau et le bâti.

Suivant un exemple de réalisation, chaque berceau se compose de deux éléments arqués réunis par au moins deux entretoises dont l'une est articulée en bout de bras solidaires du bâti et dont l'autre forme point de fixation pour l'élément de réglage de la rotation des berceaux et pour un système à sangle réglable.

On précisera encore ici que le bâti est un élément tubulaire et que la poutre présente en section transversale une forme de losange.

Le bâti de chaque berceau est muni d'au moins une vis de blocage du berceau sur la poutre précitée.

Dans l'élément tubulaire précité est ménagée au moins une ouverture utilisée pour son nettoyage.

Mais d'autres avantages de l'invention apparaîtront mieux dans la description détaillée qui suit et se réfère aux dessins annexés, donnés uniquement à titre d'exemple, et dans lesquels :
La figure 1 est une vue schématique et en perspective du dispositif de l'invention supportant deux tronçons de tube avant alignement axial ;
La figure 2 est une vue en coupe suivant la ligne II-II de la figure 1 ;
La figure 3 est un schéma illustrant le fonctionnement du dispositif pour aboutir à l'alignement axial des deux tronçons de tube.

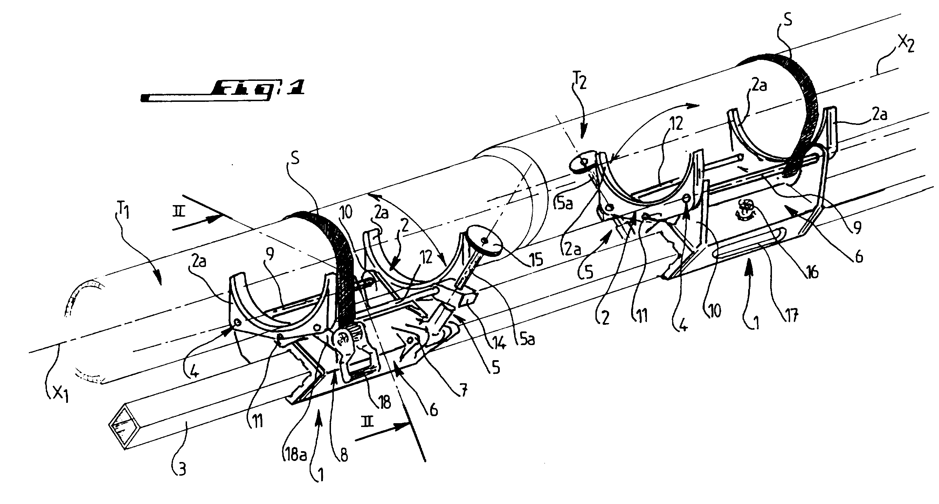

Suivant un exemple de réalisation, et en se reportant notamment à la figure 1, on voit qu'un dispositif conforme à cette invention comprend essentiellement deux supports 1 avec berceau 2 montés en opposition et de façon coulissante sur une poutre ou analogue 3.

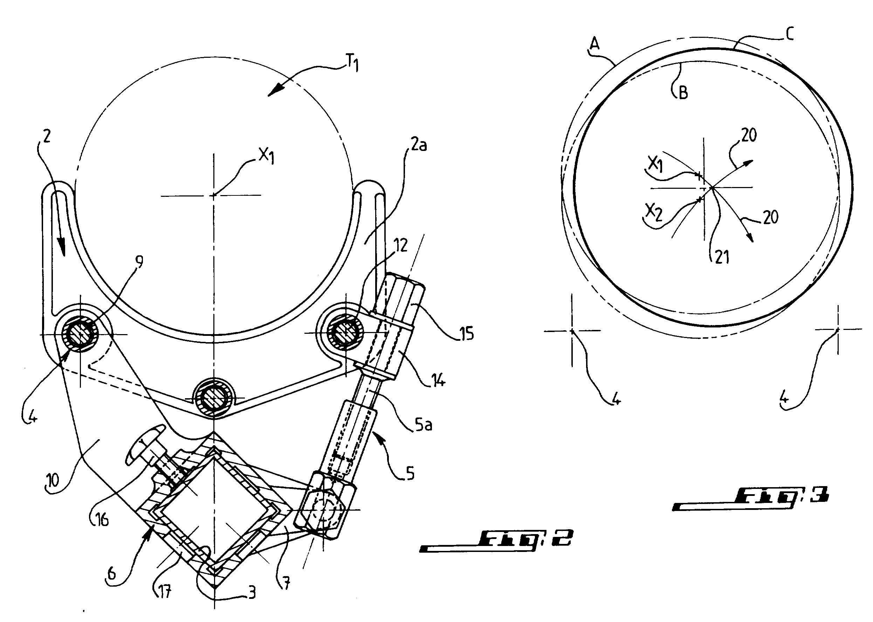

Chaque berceau 2 est monté articulé en porte-à-faux sur un bâti 6, comme on le voit en 4 sur les figures 1 et 2.

Sur chaque berceau 2, peut être maintenu un tronçon de tube ou de canalisation T₁ et T₂, ces deux tronçons pouvant, grâce au dispositif, être positionnés bout à bout et en alignement axial par rotation de l'un des berceaux 2 dans un sens et par rotation de l'autre berceau dans le sens inverse, autour de l'articulation 4, comme on l'expliquera en détail plus loin à propos du fonctionnement.

On a montré en 5 un élément de réglage, qui, suivant l'exemple de réalisation représenté, est un vérin mécanique à vis, monté entre berceau 2 et bâti 6.

Par ailleurs, un système 8 à sangle S réglable est fixé sur chaque berceau 2 pour y retenir un tronçon de tube, comme on le décrira plus en détail ultérieurement.

Comme on le voit bien sur la figure 1, chaque berceau 2 se compose de deux éléments arqués 2a réunis par plusieurs entretoises revêtant la forme de tiges.

Plus précisément, les deux éléments arqués 2a de chaque berceau 2 sont réunis l'un à l'autre par :
- une première entretoise 9 formant le point ou axe d'articulation 4 et montée en bout de bras 10 solidaires du bâti 6 lui-même monté coulissant sur la poutre 3 ;
- une deuxième entretoise 11 reliant la partie milieu des deux éléments arqués 2a de chaque berceau 2 ; et
- une troisième entretoise 12 formant un point de fixation pour le vérin mécanique 5, comme on le voit clairement sur la figure 2, et également pour le système 8 à sangle S de retenue des tronçons de tube T₁ et T₂.

Sur la figure 2, on voit que que le vérin 5 à vis 5a est articulé d'une part au bâti 6 par une chape ou analogue 7, et d'autre part sur la troisième entretoise 12 par l'intermédiaire d'une pièce en forme de chape 14. On voit en 15 sur les figures 1 et 2 le bouton de manoeuvre du vérin 5 qui peut revêtir la forme d'un écrou ou de tout autre élément approprié.

Quant au système 8 avec sangle S, comme on le voit sur la figure 1, il est fixé, par exemple soudé, et ce par l'intermédiaire d'un bras 18a, sur l'entretoise 12, et de préférence sur à la fois cette entretoise 12 et l'entretoise milieu 11.

Comme on le voit bien sur les figures 1 et 2, chaque bâti 6 sur lequel est monté articulé en porte-à-faux un berceau 2, revêt la forme d'un élément tubulaire de section polygonale, par exemple carrée, monté à coulissement sur la poutre 3 présentant en section une forme correspondante.

Ce bâti ou élément tubulaire 6 comporte une vis 16 dont la manoeuvre permet le blocage ou le déblocage du berceau 2 sur la poutre 3.

On voit en 17 sur les figures 1 et 2 une ouverture en forme de trou oblong ménagée dans les éléments tubulaires formant bâti 6.

Revenant au système 8 avec sangle 7, il est d'un type connu en soi, et on en dira simplement qu'il comporte, comme on le voit sur la figure 1, une poignée de manoeuvre 18 munie d'un cliquet (non représenté) et permettant l'allongement ou le rétrécissement de la sangle S par enroulement.

Mais, pour une meilleure compréhension de l'invention, on expliquera le fonctionnement du dispositif qui vient d'être décrit en se reportant plus particulièrement à la figure 3.

Les tubes T₁ et T₂ à assembler sont placés puis sanglés respectivement sur les berceaux 2, et ce de manière à ce qu'ils dépassent des berceaux, de façon que leurs extrémités à raccorder soient très proches l'une de l'autre, comme on le voit bien sur la figure 1.

Pour réaliser l'assemblage, une extrémité dépassante de l'un des tubes aura été préalablement munie par exemple d'un manchon électrosoudable (non représenté).

Ainsi, les extrémités affleurantes des troncons T₁ et T₂ ne sont pas alignées axialement comme on le voit sur la figure 1 (axes X₁ et X₂ non confondus), et comme on le voit sur la figure 3 où les extrémités des deux tronçons sont respectivement matérialisées par des cercles A et B à centres différents.

Si donc, il n'y a pas coïncidence des axes X₁ et X₂ des deux tronçons de tube, on réalisera la coïncidence des axes en agissant sur le vérin mécanique 5 qui constitue un système de réglage précis.

Plus précisément, comme on le voit sur la figure 3, en agissant sur les vérins 5 des deux berceaux 2 montés en opposition sur la poutre 3, l'un des berceaux 2 tournera dans un sens, tandis que l'autre berceau 2 tournera dans l'autre sens. Les courses de rotation en sens inverse autour du point d'articulation 4 sont matérialisées en 20 sur la figure 3 où l'on voit les axes X₁ et X₂ avant mise en coïncidence. Cette mise en coïncidence sera réalisée au point d'intersection 21 des deux courses de rotation, auquel point les extrémités des deux tronçons T₁ et T₂ à assembler seront en parfaite coïncidence, comme matérialisé par le cercle C.

Il suffira alors de faire coulisser le manchon électrosoudable (non représenté) pour qu'il recouvre les extrémités en coïncidence des deux tronçons sur une longueur égale. Puis on pourra procéder à l'opération de soudage.

Bien entendu, l'invention n'est nullement limitée au mode de réalisation décrit et illustré qui n'a été donné qu'à titre d'exemple.

## Revendications

1. Dispositif de positionnement bout à bout et en alignement axial de deux pièces allongées, telles que par exemple des tronçons de tube (T₁, T₂), en vue de leur assemblage et du type comprenant deux supports (1) mobiles relativement constitués chacun par un berceau (2) apte à supporter un tronçon de tube, caractérisé en ce que les deux berceaux (2) sont chacun montés en porte-à-faux sur un bâti (6) monté coulissant sur une poutre (3), en ce que les deux berceaux (2) sont montés articulés (4) en opposition sur le bâti (6) de part et d'autre de la poutre (3) pour que la rotation autour de l'articulation (4) de l'un des berceaux (2) dans un sens et la rotation de l'autre berceau dans le sens inverse réalise l'alignement axial des tronçons de tube (T₁, T₂) portés par les berceaux (2) en un point (21) correspondant à l'intersection des courses de rotation inverses (20) des deux berceaux (2), et en ce qu'un élément de réglage (5) de la course de rotation (20) des berceaux (2) est monté entre le berceau (2) et le bâti (6).

2. Dispositif selon la revendication 1, caractérisé en ce que chaque berceau (2) se compose de deux éléments arqués (2a) réunis par au moins deux entretoises dont l'une (9) est articulée en bout de bras (10) solidaires du bâti (6) et dont l'autre (12) forme un point de fixation pour l'élément (5) de réglage de la rotation des berceaux et pour un système (8) à sangle réglable.

3. Dispositif selon la revendication 1 ou 2, caractérisé en ce que le bâti précité (6) est un élément tubulaire et la poutre (3) présente en section transversale une forme de losange.

4. Dispositif selon l'une des revendications précédentes, caractérisé en ce que le bâti (6) de chaque berceau (2) est muni d'au moins une vis (16) de blocage du berceau sur la poutre précitée (3).

5. Dispositif selon la revendication 3 ou 4, caractérisé en ce que dans le bâti tubulaire précité (6) est ménagée au moins une ouverture (17) utilisée pour son nettoyage.

## Claims

1. Device for positioning two elongated members such for example as tube sections (T₁, T₂) end-to-end and in axial alignment with a view to assembling them and of the type comprising two relatively movable supports (1) constituted each one by a cradle (2) adapted to support one tube section, characterized in that both cradles (2) are each one mounted in overhanging relationship onto a frame (6) slidably mounted on a beam (3), and that both cradles (2) are pivotally mounted (4) in opposition on the frame (6) on either side of the beam (3) in order that the rotation about the hinge (4) of one of the cradles (2) in one direction and the rotation of the other cradle in the reverse direction provides the axial alignment of the tube sections (T₁, T₂) carried by the cradles (2) at a point (21) corresponding to the intersection of the reverse rotary strokes (20) of both cradles (2) and in that an element (5) for adjusting the rotary stroke (20) of the cradles (2) is mounted between the cradle (2) and the frame (6).

2. Device according to claim 1, characterized in that each cradle (2) consists of two arcuate elements (2a) joined together by at least two braces one (9) of which is pivotally connected endwise of arms (10) made fast to the frame (6) and the other one (12) of which forms a fastening point for the element (5) for the adjustment of the rotation of the cradles and for an adjustable strap system (8).

3. Device according to claim 1 or 2, characterized in that the aforesaid frame (6) is a tubular element and the beam (3) exhibits in cross section the shape of a rhombus.

4. Device according to one of the foregoing claims, characterized in that the frame (6) of each cradle (2) is provided with at least one screw (16) for blocking the cradle onto the aforesaid beam (3).

5. Device according to claim 3 or 4, characterized in that in the aforesaid frame (6) is formed at least one opening (17) used for its cleaning.

## Patentansprüche

1. Vorrichtung zur Positionierung von zwei länglichen Teilen, wie z.B. Rohrabschnitten (T₁, T₂) in endweise stumpf zusammengestoßener und axial ausgerichteter Stellung zwecks deren Zusammenfügung und der Gattung mit zwei jeweils durch einen zum Tragen eines Rohrabschnittes geeigneten Sattel (2) gebildeten relativ bewegbaren Halterungen (1), dadurch gekennzeichnet, daß die beiden Sättel (2) jeweils freitragend an einem an einem Balken (3) gleitbar angeordneten Rahmen (6) gelagert sind, daß die beiden Sättel (2) an dem Rahmen (6) beiderseits des Balkens (3) in entgegengesetzter Stellung gelenkig (4) angeordnet sind, damit das Drehen des einen der Sättel (2) um das Gelenk (4) herum in einer Richtung und das Drehen des anderen Sattels in der umgekehrten Richtung die axiale Ausrichtung der von den Sätteln (2) getragenen Rohrabschnitten (T₁, T₂) an einem der Kreuzungsstelle der entgegengesetzten Drehhüben (20) der beiden Sättel (2) entsprechenden Punkt (21) gewährleistet wird und daß ein Element (5) zur Einstellung des Drehhubes (20) der Sättel (2) zwischen dem Sattel (2) und dem Rahmen (6) angeordnet ist.

2. Vorrichtung nach Anspruch 1, dadurch gekennzeichnet, daß jeder Sattel (2) aus zwei wenigstens durch wenigstens zwei Streben vereinigten bogenförmigen Elementen (2a) besteht, von denen die eine (9) am Ende von mit dem Rahmen (6) fest verbundenen Armen (10) angelenkt ist und deren andere (12) einen Befestigungspunkt für das Element (5) zur Einstellung der Drehung der Sättel und für ein einstellbares Gurtsystem (8) bildet.

3. Vorrichtung nach Anspruch 1 oder 2, dadurch gekennzeichnet, daß der vorgenannte Rahmen (6) ein rohrförmiges Element ist und der Balken (3) im Querschnitt eine rautenförmige Gestalt aufweist.

4. Vorrichtung nach einem der vorangehenden Ansprüche, dadurch gekennzeichnet, daß der Rahmen (6) jedes Sattels (2) mit wenigstens einer Schraube (16) zum Festhalten des Sattels an dem vorgenannten Balken (3) versehen ist.

5. Vorrichtung nach Anspruch 3 oder 4, dadurch gekennzeichnet, daß in dem vorgenannten Rahmen (6) wenigstens eine für seine Reinigung verwendete Öffnung (17) gebildet ist.
